# FASCICULE DE BREVET EUROPEEN

(11) **EP 0 380 895 B1**
(45) Date de publication et mention de la délivrance du brevet: **21.07.1993**
(21) Numéro de dépôt: 89403612.8
(22) Date de dépôt: 22.12.1989
(51) Int. Cl.: B60T 8/22

(54) **Correcteur de freinage asservi à la hauteur d'un véhicule**
Von der Last eines Fahrzeugs abhängiger Bremskraftregler
Vehicle load dependent brake force regulator

(30) Priorité: 31.01.1989 FR 8901155
(43) Date de publication de la demande: 08.08.1990
(73) Titulaire: ALLIEDSIGNAL EUROPE SERVICES TECHNIQUES, 93700 Drancy (FR)
(72) Inventeur: Levrai, Roland BENDIX EUROPE Services Techniques, F-93700 Drancy (FR); Thioux, Alain BENDIX EUROPE Services Techniques, F-93700 Drancy (FR)
(74) Mandataire: Bentz, Jean-Paul

(56) Documents cités:
- DE-A- 3 315 763
- DE-U- 1 906 372

## Description

La présente invention concerne les correcteurs de freinage, et plus particulièrement, de tels correcteurs asservis à la hauteur d'un véhicule.

On sait qu'il est souhaitable de relier un tel correcteur de freinage directement à la suspension d'un véhicule en vue de faire varier le freinage des roues du véhicule en fonction de sa hauteur qui est elle-même généralement fonction de sa charge.

De tels correcteurs sont bien connus dans la technique du freinage et comprennent typiquement un corps dans lequel est monté à coulissement au moins un piston commandé par une tige d'actionnement et agencé de façon à coopérer avec au moins un élément de clapet pour commander au moins un passage de fluide de freinage entre au moins une entrée et au moins une sortie du correcteur, le correcteur comprenant un capteur de la hauteur du véhicule formé d'un levier dont le pivot est fixe par rapport au corps du correcteur, et dont une extrémité est reliée à une partie non suspendue du véhicule, la distance entre cette extrémité et le pivot définissant un premier bras de levier, le levier actionnant la tige d'actionnement à une distance du pivot définissant un second bras de levier. Un tel correcteur est par exemple décrit dans le document DE - A - 3 315 763.

De façon également classique, les liaisons entre le levier et la tige d'actionnement ou la partie non suspendue du véhicule sont réalisées à l'aide de moyens élastiques tels que des ressorts, de façon à obtenir une force d'actionnement du correcteur qui soit proportionnelle à la distance entre les parties suspendues et non suspendues du véhicule en fonction de la raideur de ce ressort.

Il peut se produire que des ressorts, fabriqués en grande série, présentent une dispersion notable de leurs caractéristiques, et en particulier de leur raideur, qui influe directement sur le fonctionnement du correcteur. Ainsi, dans certains cas la pression d'intervention du correcteur pourra se situer nettement en dehors de limites de tolérances acceptables.

Etant donné qu'il n'est pas envisageable industriellement d'usiner un ressort, il est donc nécessaire d'ajuster la raideur du ressort ou ses conditions d'utilisation.

On connaît, par le brevet français FR-A-2 534 208, un correcteur de freinage du type rappelé ci-dessus, et comprenant des moyens de tarage au moment du montage sur le véhicule. Ces moyens de tarage consistent en un élément auxiliaire, disposé entre une des extrémités du ressort de liaison aux masses non suspendues, et un élément des masses non suspendues. Cet élément auxiliaire est constitué par un levier coudé, articulé sur l'élément non suspendu, dont un des bras porte un oeillet pour la fixation du ressort, et dont l'autre bras peut être bloqué en position sur l'élément non suspendu au moyen d'une vis engagée dans une fente ménagée sur cet autre bras.

Ce dispositif présente plusieurs inconvénients. Tout d'abord, il nécessite une pièce intermédiaire dont la fixation subit des effort tangentiels de cisaillement, et est donc fragile. De plus, il ne permet que difficilement un réglage fin de la précontrainte appliquée au ressort. Enfin, l'inconvénient majeur de ce correcteur consiste en ce que le réglage ne s'effectue qu'après qu'il ait été installé sur le véhicule, imposant par là des manipulations supplémentaires et délicates au mécanicien lors de l'assemblage du véhicule.

On connaît d'autre part du document DE-U-1 906 372 un correcteur de freinage actionné par un levier comportant plusieurs points d'ancrage d'une tringlerie de longueur variable reliée à une partie non suspendue du véhicule.

La présente invention a donc pour but de prévoir un correcteur de conception fiable, dont le point d'intervention soit indépendant de la raideur du ressort, et qui puisse être réglé lors de sa fabrication pour qu'il n'ait plus qu'à être fixé sur le véhicule sans réglage supplémentaire.

Dans ce but, l'invention propose un correcteur, du type rappelé ci-dessus, qui comporte, à l'extrémité du levier reliée à une partie non suspendue du véhicule, des moyens pour faire varier le rapport entre les longueurs des premier et second bras de levier pour compenser, avant le montage du correcteur sur le véhicule, la différence de raideur d'un ressort disposé entre la tige d'actionnement et le levier en fonction de la lecture des courbes de la pression à l'entrée et à la sortie.

L'invention sera mieux comprise et d'autres buts, avantages et particularités de celle-ci apparaîtront plus clairement à la lecture de la description qui suit de modes de réalisation donnés à titre d'exemples non limitatifs, en relation avec les dessins dans lesquels :
- la Figure 1 représente schématiquement en coupe partielle un premier mode de réalisation d'un correcteur selon l'invention,
- la Figure 2 est une vue de dessus du levier du correcteur de la Figure 1,
- la Figure 3 représente schématiquement en coupe partielle l'extrémité du levier selon un deuxième mode de réalisation d'un correcteur selon l'invention,
- la Figure 4 est une vue de dessus de l'extrémité du levier de la figure 3,
- la Figure 5 représente schématiquement en coupe partielle l'extrémité du levier selon un troisième mode de réalisation d'un correcteur selon l'invention.

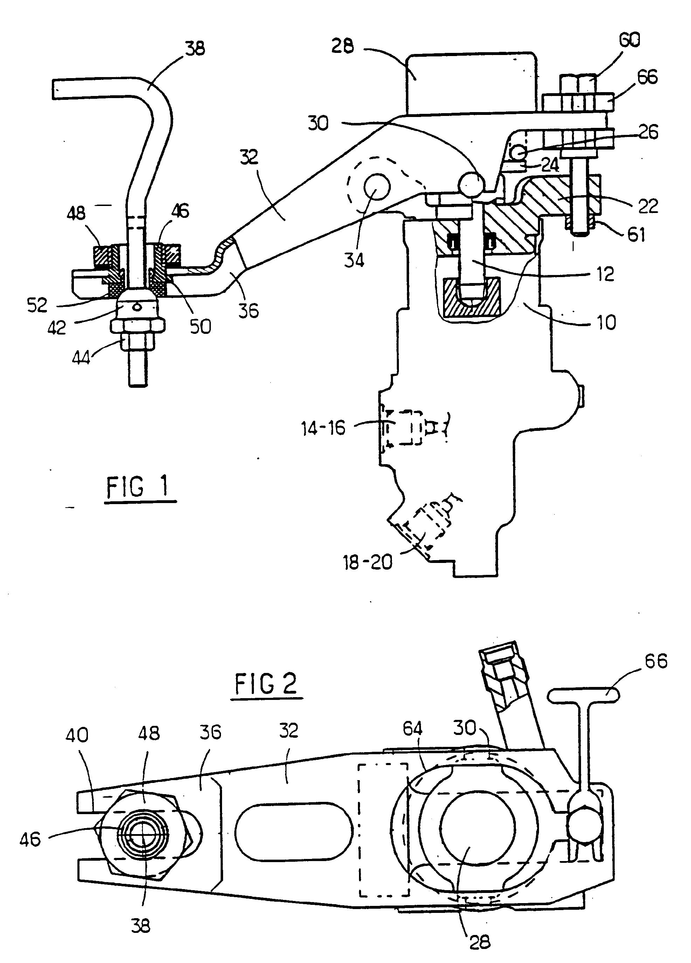

On a représenté Figure 1 un correcteur de freinage de conception classique, dont le fonctionnement ne sera pas décrit en détail puisqu'il est bien connu de l'Homme de l'Art. Ce correcteur comprend un corps 10 enfermant, dans l'exemple représenté, deux pistons commandés par une tige d'actionnement 12. Ces pistons commandent chacun des clapets situés entre les orifices d'entrée 14, 16 et des orifices de sortie 18, 20, respectivement, pour moduler la pression du fluide de freinage aux sorties 18, 20 en fonction de la pression aux entrées 14, 16 et de la charge du véhicule.

A cet effet, la tige d'actionnement 12 traverse le couvercle 22 du corps 10 duquel elle fait saillie. Une coupelle 24 emboîte l'extrémité de la tige faisant saillie du couvercle 22, à une distance suffisante de ce dernier pour que, lors du mouvement de la tige 12, elle ne puisse venir en butée sur le couvercle 22.

Un ressort de compression 26 prend d'une part appui sur la coupelle 24, et, d'autre part, sur le fond d'une pièce 28 de forme générale cylindrique, comportant deux ailes diamétralement opposées sur lesquelles sont formés des tourillons 30 s'étendant radialement vers l'extérieur et reçus dans des logements correspondants d'un levier 32 de détection de la hauteur de l'assiette du véhicule. De préférence, le pivot 34 du levier est solidaire du corps 10 du correcteur et donc du chassis, tandis qu'une extrémité 36 du levier est reliée à un point non suspendu du véhicule par une tige 38.

Pour tenir compte de la dispersion des valeurs des raideurs entre différents ressorts, l'invention prévoit de réaliser un préréglage du point d'intervention du correcteur en fonction de la raideur du ressort 26 en effectuant le réglage de la course d'actionnement de ce ressort pour obtenir ainsi un réglage dynamique. Dans ce but, on fait varier le rapport entre la longueur du bras de levier déterminé par la distance entre le pivot du levier et le point de fixation du levier à une partie non suspendue du véhicule, et la longueur du bras de levier déterminé par la distance entre le pivot et le point d'appui du levier sur la tige d'actionnement du correcteur. Le levier comporte une pièce coulissante elle-même reliée à une partie non suspendue du véhicule, qui sera immobilisée sur le levier dans la position correspondant à la pression d'intervention voulue pour une hauteur donnée du véhicule.

On a représenté Figure 1 un correcteur réalisé selon l'invention, qui est muni d'un levier 32 dont l'extrémité 36, destinée à être reliée à une partie non suspendue du véhicule, est conformée pour présenter une ouverture longitudinale 40 (Figure 2) ouverte vers l'extrémité la plus éloignée du pivot 34.

La tige 38 de liaison à une partie non suspendue du véhicule présente un filetage sur son extrémité destinée à coopérer avec le levier 32. Sur ce filetage est vissé un écrou 42 présentant une partie de forme générale hémisphérique, que l'on peut maintenir en position sur la tige 38 au moyen d'un contre-écrou 44.

L'ouverture longitudinale 40 reçoit un élément de fixation prévu sur la tige 38, formé d'un système à vis tubulaire 46 et écrou 48. La vis tubulaire 46 a un diamètre extérieur légèrement inférieur à la largeur de l'ouverture longitudinale 40 et comporte une collerette 50 destinée à venir s'appuyer sur la face du levier opposée à celle sur laquelle s'appuie l'écrou 48.

De plus, la vis tubulaire 46 est solidaire d'une pièce 52, elle même tubulaire, et présentant une empreinte concave hémisphérique de forme sensiblement complémentaire à celle de la partie hémisphérique de l'écrou 42.

On comprend donc que, grâce à l'invention, le correcteur peut être facilement préréglé immédiatement après son assemblage, comme suit.

L'extrémité 36 du levier 32 est équipée du système vis-écrou 46,48. Une pression hydraulique croissante est appliquée aux orifices d'entrée 14,16 du correcteur, et cette pression est mesurée aux orifices de sortie 18,20, le levier étant dans une première position pré-déterminée par rapport au corps du correcteur. La même mesure est répétée pour une deuxième position du levier également pré-déterminée. La lecture des courbes de la pression d'entrée par rapport à la pression de sortie effectuées au cours de ces deux mesures, permet de déterminer les deux points d'intervention du correcteur, ainsi que la raideur du ressort 26.

Si les valeurs trouvées sont incorrectes, le déplacement du système vis-écrou 46,48 dans l'ouverture 40 permet de compenser la différence de raideur du ressort 26 par une différence de la longueur du bras de levier entre le pivot 34 et le point de fixation de la tige 38.

Le système vis-écrou 46,48 est alors immobilisé dans cette position par serrage de l'écrou 48 sur la vis 46, qui enserrent alors entre eux l'extrémité 36 du levier 32.

Le levier 32 est ensuite immobilisé en position de repos grâce à une cale 66 et à un système de vis 60 et contre-écrou 61, solidaire du couvercle 22 et s'étendant à travers une extension de l'ouverture 64 pratiquée dans le levier 32 pour laisser le passage à la pièce 28. Le correcteur est alors parfaitement préréglé en atelier et pourra dès lors être installé sur un véhicule sans aucun réglage subsidiaire. Pour ce faire, une fois que le correcteur a été fixé sur une partie suspendue du véhicule, il suffit d'amener la tige 38 de liaison à une partie non suspendue du véhicule à traverser la vis 46. On visse alors sur l'extrémité filetée de la tige 38 l'écrou 42 jusqu'à ce que sa partie hémisphérique vienne se loger dans l'empreinte concave complémentaire formée dans la pièce 52 solidaire de la vis 46. L'écrou 42 est alors immobilisé dans cette position à l'aide du contre-écrou 44. Il suffit alors d'ôter la cale 66 pour libérer le levier 32 et rendre le correcteur opérationnel, sans manipulation supplémentaire, et quelles que soient les caractéristiques du ressort 26.

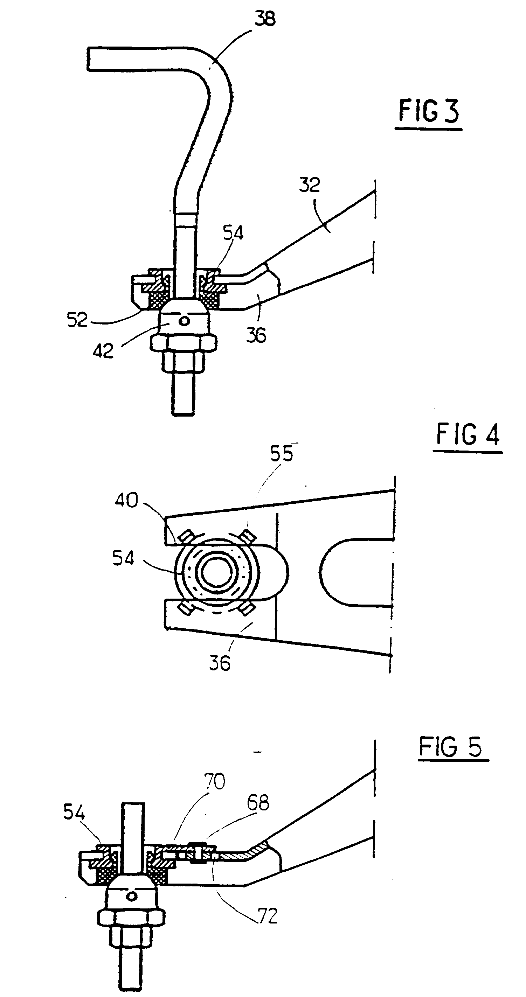

On a représenté Figures 3 et 4 un deuxième mode de réalisation de l'élément de fixation de la tige 38 sur l'extrémité 36 du levier 32. Cet élément de fixation est constitué d'une rondelle 54, de diamètre extérieur supérieur à la largeur de l'ouverture longitudinale 40, et présentant sur sa périphérie extérieure une gorge annulaire d'épaisseur légèrement supérieure à celle de l'extrémité 36 du levier et de diamètre légèrement inférieur à la largeur de l'ouverture longitudinale 40, de façon à permettre à la rondelle 54 de coulisser dans l'ouverture 40. Comme précédemment, la rondelle 54 est solidaire d'une pièce 52 tubulaire et présentant une empreinte concave hémisphérique de forme complémentaire à celle de la partie hémisphérique de l'écrou 42.

Selon ce mode de réalisation, le réglage dynamique du point d'intervention en fonction des caractéristiques du ressort 26 est effectué par déplacement de la rondelle 54 dans l'ouverture 40 jusqu'à l'obtention de la position idéale, puis la rondelle 54 est immobilisée dans cette position en pratiquant, dans l'extrémité 36 du levier 32, et de préférence sur les bords de l'ouverture 40 adjacents à la rondelle 54, des déformations en creux 55 au moyen d'un outil approprié tel qu'un poinçon.

On a représenté Figure 5 un troisième mode de réalisation de l'élément de fixation de la tige 38 sur l'extrémité 36 du levier 32, où le réglage n'est plus effectué de façon continue comme dans les modes de réalisation précédemment décrits, mais de façon discrète dans des positions prédéterminées. Dans ce but, la rondelle 54 comprend une partie 70 recouvrant partiellement l'extrémité 36 du levier. Dans cette partie ainsi que dans le levier seront formés des trous 72 venant en coïncidence pour certaines positions, et dans lesquels on pourra insérer et sertir un rivet 68 pour immobiliser les deux pièces dans la position choisie.

Il est bien évident que l'invention n'est pas limitée aux modes de réalisation décrits. Ainsi, l'invention s'applique aussi à un correcteur à simple circuit hydraulique, ainsi qu'à un correcteur dont la liaison à une partie non suspendue du véhicule est réalisée par un ressort.

## Revendications

1. Correcteur de freinage asservi à la hauteur d'un véhicule, comprenant un corps (10) dans lequel est monté à coulissement au moins un piston commandé par une tige d'actionnement (12) et agencé de façon à coopérer avec au moins un élément de clapet pour commander au moins un passage de fluide de freinage entre au moins une entrée (14, 16) et au moins une sortie (18, 20) du correcteur, le correcteur comprenant un capteur de la hauteur du véhicule formé d'un levier (32) dont le pivot (34) est fixé par rapport au corps (10) du correcteur, et dont une extrémité (36) est reliée à une partie non suspendue du véhicule, la distance entre cette extrémité (36) et le pivot (34) définissant un premier bras de levier, le levier (32) actionnant la tige d'actionnement (12), à une distance du pivot (34) définissant un second bras de levier, caractérisé en ce qu'il comporte à l'extrémité (36) du levier (32) reliée à une partie non suspendue du véhicule des moyens (40, 46, 48, 54) pour faire varier le rapport entre les longueurs des premier et second bras de levier pour compenser, avant le montage du correcteur sur le véhicule, la différence de raideur d'un ressort (26) disposé entre la tige d'actionnement (12) et le levier (32) en fonction de la lecture des courbes de la pression à l'entrée (14, 16) et à la sortie (18, 20).

2. Correcteur selon la revendication 1, caractérisé en ce que l'extrémité (36) du levier (32) comporte une ouverture longitudinale (40) recevant un système à vis-écrou (46,48), la vis (46) étant tubulaire et étant traversée par une tige (38) de liaison à une partie non suspendue du véhicule.

3. Correcteur selon la revendication 1, caractérisé en ce que l'extrémité (36) du levier (32) comporte une ouverture longitudinale (40) recevant une rondelle (54) qui peut être fixée en position dans l'ouverture (40), la rondelle etant traversée par une tige (38) de liaison à une partie non suspendue du véhicule.

4. Correcteur selon la revendication 3, caractérisé en ce que la rondelle (54) est fixée en position dans l'ouverture (40) par des déformations en creux (55) pratiquées sur les bords de l'ouverture (40) adjacents à la rondelle (54).

5. Correcteur selon la revendication 3, caractérisé en ce que la rondelle (54) comprend une partie (70) recouvrant partiellement l'extémité (36) du levier (32), la rondelle (54) étant immobilisée sur l'extrémité (36) par au moins un rivet (68).

## Patentansprüche

1. Bremskraftregler, der auf die Bodenfreiheit eines Fahrzeugs anspricht, mit einem Körper (10), in dem wenigstens ein Kolben verschiebbar angeordnet ist, der durch eine Betätigungsstange (12) gesteuert und für ein Zusammenwirken mit wenigstens einem Sperrventilglied vorgesehen ist, um wenigstens einen Bremsfluiddurchgang zwischen wenigstens einem Eingang (14, 16) und wenigstens einem Ausgang (18, 20) des Reglers zu steuern, wobei der Regler einen Fühler für die Bodenfreiheit des Fahrzeugs enthält, der durch einen Hebel (32) gebildet ist, dessen Schwenkachse (34) bezüglich des Körpers (10) des Reglers festgelegt ist und dessen eines Ende (36) mit einem nicht aufgehängten Teil des Fahrzeugs verbunden ist, wobei der Abstand zwischen diesem Ende (36) und der Schwenkachse (34) einen ersten Hebelarm festlegt und der Hebel (32) die Betätigungsstange (12) in einem Abstand von der Schwenkachse (34) betätigt, der einen zweiten Hebelarm festlegt, dadurch gekennzeichnet, daß er an dem Ende (36) des Hebels (32), das mit einem nicht aufgehängten Teil des Fahrzeugs verbunden ist, Mittel (40, 46, 48, 54) aufweist, um das Verhältnis zwischen den Längen des ersten und des zweiten Hebelarms zu variieren, um vor der Montage des Reglers an dem Fahrzeug die Steifheitsabweichung einer zwischen der Betätigungsstange (12) und dem Hebel (32) angeordneten Feder in Abhängigkeit von dem Ablesen der Kennlinien des Druckes an dem Eingang (14, 16) und an dem Ausgang (18, 20) zu kompensieren.

2. Regler nach Anspruch 1, dadurch gekennzeichnet, daß das Ende (36) des Hebels (32) eine Längsöffnung (40) aufweist, die ein Schrauben/Mutter-System (46, 48) aufnimmt, wobei die Schraube (46) rohrförmig ausgebildet und von einer Stange (38) für eine Verbindung mit einem nicht aufgehängten Teil des Fahrzeugs durchdrungen ist.

3. Regler nach Anspruch 1, dadurch gekennzeichnet, daß das Ende (36) des Hebels (32) eine Längsöffnung (40) aufweist, die eine Scheibe (54) aufnimmt, die in der Öffnung (40) hinsichtlich ihrer Stellung festlegbar ist, wobei die Scheibe von einer Stange (38) für eine Verbindung mit einem nicht aufgehängten Teil des Fahrzeugs durchdrungen ist.

4. Regler nach Anspruch 3, dadurch gekennzeichnet, daß die Scheibe (54) hinsichtlich ihrer Stellung in der Öffnung (40) durch Tiefverformungen (55) festgelegt ist, die an den Rändern der Öffnung (40), die an die Scheibe (54) angrenzen, ausgeführt sind.

5. Regler nach Anspruch 3, dadurch gekennzeichnet, daß die Scheibe (54) einen Teil (70) aufweist, der das Ende (36) des Hebels (32) teilweise überdeckt, wobei die Scheibe (54) an dem Ende (36) durch wenigstens einen Niet (68) festgelegt ist.

## Claims

1. Braking corrector governed by the height of a vehicle, comprising a body (10), in which is slideably mounted at least one piston controlled by an actuating rod (12) and arranged so as to interact with at least one valve element, in order to control at least one brake-fluid passage between at least one inlet (14,16) and at least one outlet (18,20) of the corrector, the corrector possessing a sensor detecting the height of the vehicle and formed from a lever (32), the pivot (34) of which is stationary relative to the body (10) of the corrector and one end (36) of which is connected to an unsuspended part of the vehicle, the distance between this end (36) and the pivot (34) defining a first lever arm, and the lever (32), which actuates the actuating rod (12) at a distance from the pivot (34), defining a second lever arm, characterized in that, at that end (36) of the lever (32) connected to an unsuspended part of the vehicle, it possesses means (40, 46, 48, 54) for varying the ratio between the lengths of the first and second lever arms in order to compensate, before the corrector is mounted on the vehicle, the difference in rigidity of a spring (26) arranged between the actuating rod (12) and the lever (32) as a function of a reading of the curves for the pressure at the inlet (14, 16) and at the outlet (18, 20).

2. Corrector according to Claim 1, characterized in that the end (36) of the lever (32) has a longitudinal aperture (40) receiving a screw/nut system (46, 48), the screw (46) being tubular and having passing through it a rod (38) for connection to an unsuspended part of the vehicle.

3. Corrector according to Claim 1, characterized in that the end (36) of the lever (32) has a longitudinal aperture (40) receiving a washer (54) which can be secured in position in the aperture (40), the washer having passing through it a rod (38) for connection to an unsuspended part of the vehicle.

4. Corrector according to Claim 3, characterized in that the washer (54) is secured in position in the aperture (40) by means of set-in deformations (55) made on those edges of the aperture (40) adjacent to the washer (54).

5. Corrector according to Claim 3, characterized in that the washer (54) possesses a part (70) partially covering the end (36) of the lever (32), the washer (54) being immobilized on the end (36) by means of at least one rivet (68).
